# EUROPÄISCHE PATENTSCHRIFT

(11) **EP 1 617 537 B1**
(45) Veröffentlichungstag und Bekanntmachung des Hinweises auf die Patenterteilung: **01.08.2007**
(21) Anmeldenummer: 05291341.5
(22) Anmeldetag: 22.06.2005
(51) Int. Cl.: H02G 15/34, H01R 4/68

(54) **Endenabschluss**
Cable end
Extrémité de câble

(30) Priorität: 16.07.2004 DE 102004034494
(43) Veröffentlichungstag der Anmeldung: 18.01.2006
(73) Patentinhaber: Nexans, 75008 Paris (FR)
(72) Erfinder: Schmidt, Frank, 30855 Langenhagen (DE); Allais, Arnaud, Dr., 30625 Hannover (DE); Mirebeau, Pierre, 91140 Villebon sur Yvette (FR); Gahungu, François, 59600 Vieux-Reng (FR); Lallouet, Nicolas, 62200 Saint Martin Boulogne (FR)
(74) Vertreter: Döring, Roger

(56) Entgegenhaltungen:
- EP-A- 1 283 576
- EP-A- 1 489 692
- WO-A-03/034447
- PATENT ABSTRACTS OF JAPAN Bd. 1999, Nr. 03, 31. März 1999 (1999-03-31) & JP 10 321271 A (FUJIKURA LTD; CHUBU ELECTRIC POWER CO INC), 4. Dezember 1998 (1998-12-04)
- PATENT ABSTRACTS OF JAPAN Bd. 1997, Nr. 02, 28. Februar 1997 (1997-02-28) & JP 08 265956 A (SUMITOMO ELECTRIC IND LTD; CHUBU ELECTRIC POWER CO INC), 11. Oktober 1996 (1996-10-11)

## Beschreibung

Die Erfindung betrifft einen Endenabschluß für ein supraleitendes Kabel nach dem Oberbegriff des Anspruchs 1.

Supraleitende Kabel benötigen an ihren Enden Einrichtungen, mittels derer Strom und Spannung von der tiefen Temperatur des Kabels auf Umgebungstemperatur übergeleitet werden.

Ein Problem entsteht dabei, wenn der Leiter des supraleitenden Kabels, der innerhalb eines Kryostaten in Längsrichtung des Kabels frei verschieblich angeordnet ist, sich beim Abkühlvorgang auf die Temperatur, bei welcher der supraleitende Werkstoff in den supraleitenden Zustand übergeht, zusammenzieht bzw. auch dann, wenn das Kabel sich auf die Umgebungstemperatur erwärmt, und der Leiter sich dabei ausdehnt.

Aus der EP 1 283 576 A1 ist ein Endenabschluß für ein supraleitfähiges Kabel bekannt, bei welchem das Ende des Leiters des supraleitfähigen Kabels in einer elektrisch leitfähigen Büchse mündet, die über ein Rohrstück mit dem Leiter innerhalb des Endenabschlusses fest verbunden ist.

Aus der WO 03/034447 A1 ist ein Endenabschluß für ein supraleitendes Kabel gemäß Oberbegriff des Anspruchs 1 bekannt.

Der Erfindung liegt die Aufgabe zugrunde, eine Lösung zu finden, die unter Beibehaltung des elektrischen Kontaktes eine Bewegung des Leiters des supraleitfähigen Kabels bzw. eines mit dem Ende des supraleitfähigen Kabels verbundenen Normalleiter ermöglicht.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Der wesentliche Vorteil der Erfindung ist darin zu sehen, daß auf aufwendige Ausweichlösungen zur Behebung des Problems verzichtet werden kann, und auf ein auf dem Markt erhältliches Produkt, nämlich das rohrförmige Bauteil, zurückgegriffen werden kann. Ein weiterer Vorteil der Erfindung liegt noch darin, daß das rohrförmige Bauteil aufgrund seiner federnden Lamellen auch bei einer radialen Ausdehnung bzw. Kontraktion stets eine Kontaktierung garantiert.

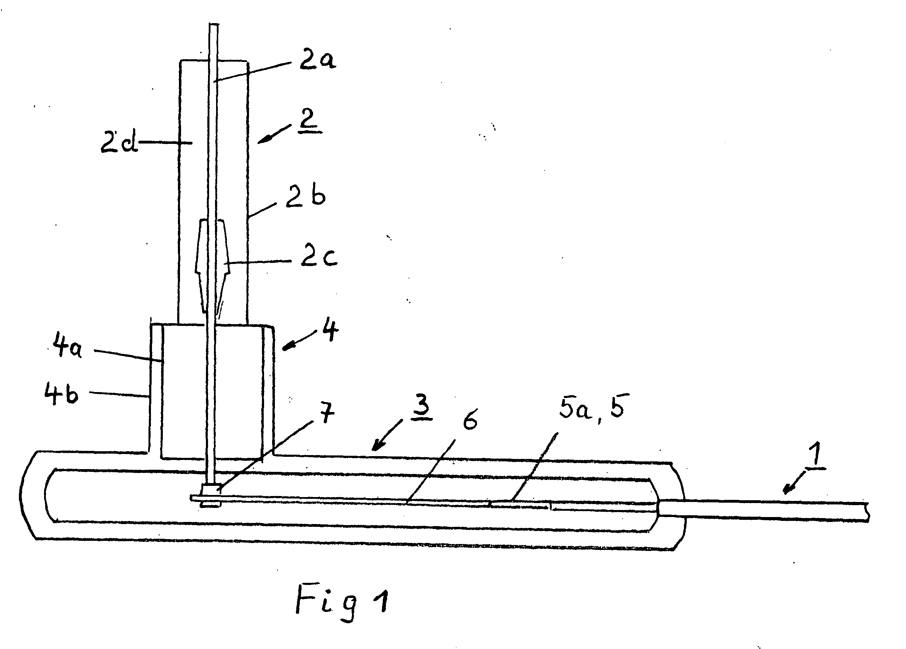

Die Erfindung ist anhand der in den Figuren 1 bis 3 schematisch dargestellten Ausführungsbeispiele näher erläutert.

In der Figur 1 ist ein seitlicher Schnitt durch eine Anordnung zum Verbinden eines supraleitfähigen Kabels 1 mit einem Endenabschluß 2 dargestellt. Das supraleitfähige Kabel 1 besteht wie an sich bekannt aus einer Kabelseele und einem die Kabelseele umgebenden Kryostaten.

Die Kabelseele besteht aus einem Leiter und einem den Leiter umgebenden Dielektrikum. Ein solches supraleitfähiges Kabel ist aus der WO 02/15203 bekannt.

Der Endenabschluß 2 besteht aus einem Stromleiter 2a, einem den Stromleiter 2a umgebenden Isolator 2b sowie einem Feldsteuerelement 2c. Der Innenraum 2d des Isolators 2b ist vorteilhafterweise mit Isolieröl gefüllt.

Mit 3 ist ein das Kabelende und die Verbindungsstelle zwischen dem Leiter 5 des Kabels 1 und dem Stromleiter 2a umgebendes Gehäuse bezeichnet, in welchem ein Vakuum vorherrscht. Auf dem Gehäuse 3 sitzt ein Rohrstutzen 4, welcher den Stromleiter 2a konzentrisch umgibt. Der Rohrstutzen 4 ist zweischalig ausgebildet, wobei der Raum zwischen den beiden Schalen 4a und 4b mit einer Superisolierung ausgefüllt und evakuiert ist. Der zwischen dem Stromleiter 2a und der inneren Schale 4a befindlichen Raum ist mit einem Isolierwerkstoff, vorzugsweise einem Schaumstoff ausgefüllt.

Im Folgenden soll eine besonders vorteilhafte Ausgestaltung einer Verbindung zwischen dem Leiter des Kabels 1 und dem Stromleiter 2a beschrieben werden.

Das von der nicht näher bezeichneten Isolierschicht befreite Ende 5a des supraleitfähigen Leiters 5, welcher aus einem zentralen Element z. B. einem verdichteten Seil aus Kupferdrähten und mehreren auf das zentrale Element aufgewickelten Bändern aus supraleitfähigem Material besteht, wird mit einem Bolzen oder Rohr 6 aus Kupfer verbunden, z. B. durch Löten. Die Enden der einzelnen Bänder aus supraleitfähigem Material werden elektrisch leitend mit der Oberfläche des Rohres oder Bolzens 6 verbunden.

An das untere Ende des Stromleiters 2a ist ein rohrförmiges Bauteil 7 elektrisch leitend angeschlossen, in dessen Öffnung der Bolzen bzw. das Rohr 6 längsverschieblich gleiten kann. Das rohrförmige Bauteil 7 weist eine Vielzahl von radial nach innen und/oder nach außen federnde Lamellen auf.

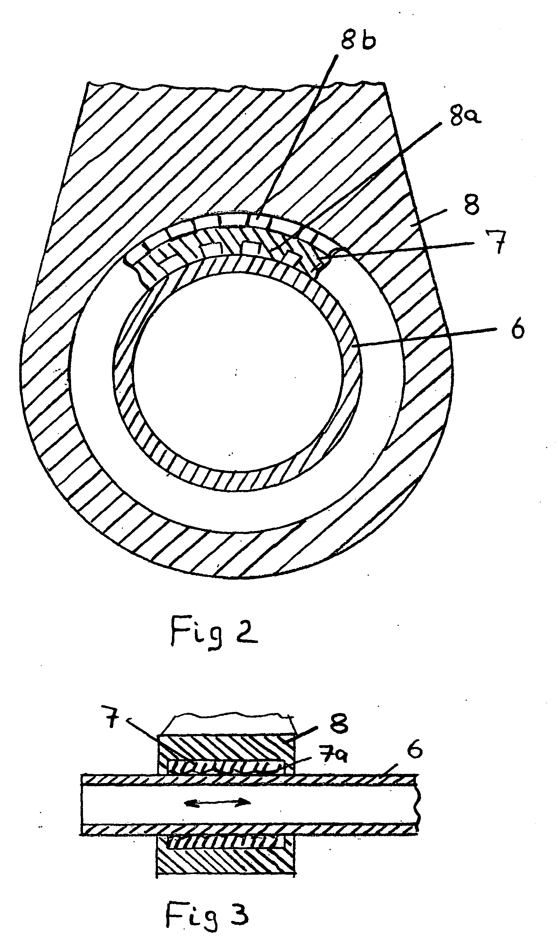

Die Figur 2 zeigt einen Schnitt durch den Bereich des rohrförmigen Bauteils 7, wobei das rohrförmige Bauteil 7 nur zum Teil geschnitten dargestellt ist. Im Innern des rohrförmigen Bauteils 7 befindet sich das mit dem Leiter 5 des Kabels 1 verbundene Rohr bzw. der Bolzen 6. Das rohrförmige Bauteil 7 ist elektrisch leitend mit einem Übergangsstück 8 verbunden, welches wiederum mit dem Stromleiter 2a elektrisch leitend verbunden ist. Das rohrförmige Bauteil 7 kann sowohl nach innen ragende Lamellen 7a als auch nach außen ragende Lamellen 7b aufweisen, die sich radial nach innen (Lamellen 7a) auf dem Rohr oder Bolzen 6 federnd abstützen und radial nach außen (Lamellen 7b) federnd in der Bohrung des Übergangsstücks 8 abstützen. Die Lamellen 7a und 7b sorgen für einen ständigen Kontakt zwischen dem Rohr bzw. Bolzen 6 und dem Übergangsstück 8 auch während einer Verschiebung des Rohres oder Bolzens 6 in Längsrichtung des Kabels 1. Die Lamellen 7a und 7b nehmen auch eine radiale Dilatation sowie Kontraktion auf, wenn das Kabel außer bzw. in Betrieb genommen wird, d. h. die Kühlung des Kabels abgeschaltet oder eingeschaltet wird. Das rohrförmige Bauteil 7 besteht vorteilhafterweise aus Kupfer und weist an seiner Oberfläche eine dünne Schicht aus Silber auf.

In der Figur 3 ist ein seitlicher Schnitt im Bereich des rohrförmigen Bauteils dargestellt.

Das rohrförmige Bauteil 7 ist in dem Übergangsstück 8 fixiert. Bei dieser Ausführungsform weist das rohrförmige Bauteil 7 nur nach innen ragende Lamellen 7a auf, welche einen elektrischen Kontakt zwischen dem Bolzen oder dem Rohr 6 und dem rohrförmigen Bauteil 7 und somit eine elektrisch leitende Verbindung zu dem Übergangsstück 8 und dem Stromleiter 2a gewährleisten und zwar auch während der Aufwärm- bzw. Abkühlphase des Kabels 1, in welcher das Rohr bzw. der Bolzen 6 in dem rohrförmigen Bauteil 7 gleitet.

## Patentansprüche

1. Endenabschluß (2) für ein supraleitendes Kabel (1), welcher aus einem Stromleiter (2a) und einem den Stromleiter (2a) umgebenden Isolator (2b) besteht, wobei das supraleitende Kabel (1) eine Seele mit einem supraleitfähigen Leiter (5) und einer den Leiter (5) umgebenden Isolierschicht aufweist und wobei die Seele längsverschieblich in einem Kryostaten angeordnet ist, **dadurch gekennzeichnet, daß** der Stromleiter (2a) des Endenabschlusses (2) mit dem supraleitfähigen Leiter (5) bzw. einem mit dem supraleitfähigen Leiter (5) verbundenen Normalleiter (6) über ein rohrförmiges Bauteil (7) aus elektrisch leitfähigem Werkstoff elektrisch verbunden ist, wobei der supraleitfähige Leiter (5) bzw. der Normalleiter (6) in Richtung des supraleitenden Kabels (1) in dem Bauteil (7) gleiten kann.

2. Endenabschluß nach Anspruch 1, **dadurch gekennzeichnet, daß** der Normalleiter ein Rohr oder Bolzen (6) ist, der an das Ende des supraleitfähigen Leiters (5) elektrisch leitend angebracht ist, wobei das Rohr bzw. der Bolzen (6) in dem rohrförmigen Bauteil (7) angeordnet ist und in Längsrichtung des Kabels (1) gleiten kann.

3. Endenabschluß nach Anspruch 1 oder 2, **dadurch gekennzeichnet, daß** das rohrförmige Bauteil (7) an seiner Innenseite und/oder seiner Außenseite eine Vielzahl von radial federnden Lamellen (7a,7b) aufweist, wobei sich die nach innen weisenden Lamellen (7a) auf der Oberfläche des supraleitfähigen Leiters (5) bzw. des Rohres oder Bolzens (6) aus elektrisch leitfähigem Werkstoff abstützen.

## Claims

1. End termination (2) for a superconducting cable (1) which comprises an electrical conductor (2a) and an insulator (2b) surrounding the electrical conductor (2a), with the superconducting cable (1) having a core with a superconducting conductor (5) and having an insulating layer surrounding the conductor (5), and with the core being arranged such that it can be moved longitudinally in a cryostat, **characterized in that** the electrical conductor (2a) of the end termination (2) is connected to the superconducting conductor (5) and/or to a normal conductor (6), which is connected to the superconducting conductor (5), via a tubular component (7) composed of electrically conductive material, in which case the superconducting conductor (5) or the normal conductor (6) can slide in the component (7) in the direction of the superconducting cable (1).

2. End termination according to Claim 1, **characterized in that** the normal conductor is a tube or bolt (6) which is electrically conductively fitted to the end of the superconducting conductor (5), in which case the tube or the bolt (6) is arranged in the tubular component (7) and can slide in the longitudinal direction of the cable (1).

3. End termination according to Claim 1 or 2, **characterized in that** the tubular component (7) has a multiplicity of radially sprung laminates (7a, 7b) on its inside and/or on its outside, with those laminates (7a) which point inwards being supported on the surface of the superconducting conductor (5) or of the tube or bolt (6) composed of electrically conductive material.

## Revendications

1. Extrémité de câble (2) pour un câble supraconducteur (1), qui se compose d'un conducteur de courant (2a) et d'un isolant (2b) entourant le conducteur de courant (2a), le câble supraconducteur (1) présentant une âme avec un conducteur supraconducteur (5) et une couche isolante entourant le conducteur (5), l'âme étant disposée de manière déplaçable longitudinalement dans un cryostat, **caractérisée en ce que** le conducteur de courant (2a) de l'extrémité de câble (2) est connecté électriquement au conducteur supraconducteur (5) ou à un conducteur normal (6) connecté au conducteur supraconducteur (5) par le biais d'un composant de forme tubulaire (7) en matériau électriquement conducteur, le conducteur supraconducteur (5) ou le conducteur normal (6) pouvant glisser dans le composant (7) dans la direction du câble supraconducteur (1).

2. Extrémité de câble selon la revendication 1, **caractérisée en ce que** le conducteur normal est un tube ou un goujon (6) qui est branché de manière électriquement conductrice à l'extrémité du conducteur supraconducteur (5), le tube ou le goujon (6) étant disposé dans le composant de forme tubulaire (7) et pouvant glisser dans la direction longitudinale du câble (1).

3. Extrémité de câble selon la revendication 1 ou 2, **caractérisée en ce que** le composant de forme tubulaire (7) présente sur son côté interne et/ou sur son côté externe une pluralité de lamelles radialement élastiques (7a, 7b), les lamelles (7a) tournées vers l'intérieur s'appuyant sur la surface du conducteur supraconducteur (5) ou du tube ou goujon (6) en matériau électriquement conducteur.
